Europäisches Patentamt

European Patent Office

Office européen des brevets

(19)

(11) Veröffentlichungsnummer: **0 353 449 B1**

# (12) EUROPÄISCHE PATENTSCHRIFT

(45) Veröffentlichungstag der Patentschrift: **19.01.94**

(51) Int. Cl.⁵: **H01F 5/08**

(21) Anmeldenummer: **89111440.7**

(22) Anmeldetag: **23.06.89**

(54) **Vorrichtung zur induktiven Strombegrenzung eines Wechselstromes unter Ausnutzungder Supraleitfähigkeit Supraleiters.**

(30) Priorität: **02.08.88 CH 2894/88**

(43) Veröffentlichungstag der Anmeldung:
**07.02.90 Patentblatt 90/06**

(45) Bekanntmachung des Hinweises auf die
Patenterteilung:
**19.01.94 Patentblatt 94/03**

(84) Benannte Vertragsstaaten:
**CH DE FR GB IT LI SE**

(56) Entgegenhaltungen:
**DE-B- 1 089 801**
**US-A- 3 094 628**

**I.E.E.E.Spectrum, vol. 25, no. 5, Mai 1988, New York,US Seiten 30 - 41; K.Fitzgerald: "Super-conductivity:fact vs fancy"**

(73) Patentinhaber: **ASEA BROWN BOVERI AG**
**Haselstrasse**
**CH-5401 Baden(CH)**

(72) Erfinder: **Dersch, Helmut, Dr.**
**Chilesteig 45**
**CH-8116 Würenlos(CH)**

EP 0 353 449 B1

## Beschreibung

TECHNISCHES GEBIET

Bei der Erfindung wird ausgegangen von einer Vorrichtung zur induktiven Strombegrenzung eines Wechselstromes unter Ausnutzung der Supraleitfähigkeit eines Supraleiters nach dem Oberbegriff des Patentanspruchs 1.

STAND DER TECHNIK

Mit dem Oberbegriff des Patentanspruchs 1 nimmt die Erfindung auf einen Stand der Technik Bezug, wie er aus der DE-A-1 089 801 bekannt ist. Dort ist ein Schaltelement zum Ändern der Induktivität eines elektrischen Leiters in Gestalt einer um einen zylindrischen, ferromagnetischen Kern gewickelten, supraleitenden Induktionsspule aus Niobdraht beschrieben, bei dem um diesen Kern eine dünne Schale oder eine Hülse aus einem supraleitenden Material, wie z. B. Tantal oder Blei, vorgesehen bzw. aufgedampft ist. Zusätzlich zu dieser Induktionsspule ist eine an eine Steuerstromquelle angeschlossene Steuerspule aus Kupfer- oder Niobdraht vorgesehen, mit deren Hilfe ein durch die Induktionsspule erzeugtes Magnetfeld so stark erhöht werden kann, dass die Supraleitung der vorher supraleitenden Schale bzw. Hülse verschwindet und die Induktivität der Induktionsspule sprunghaft ansteigt.

Das zum Schalten kleiner Signale vorgesehene Schaltelement wird vorzugsweise in ein flüssiges Heliumbad eingetaucht, wobei die Verdrängungsfeldstärke in der Grössenordnung von 50 Oe bis 100 Oe liegt.

Aus IEEE Spectrum, Special Report, May 1988, S. 31 - 41 sind keramische Hochtemperatursupraleiter mit Sprungtemperaturen oberhalb 77 K u. a. mit den Elementen Bi, Sr, Ca, Cu, O und Tl, Ba, Ca, Cu, O bekannt, bei denen jedoch die genauen stöchiometrischen Zusammensetzungen nicht angegeben sind.

STAND DER TECHNIK

Strombegrenzer im Hochstrombereich von über 1 kA Wechselstrom können mit Vorteil in Verteilnetzen, als Generator-, Transformator- oder Apparateschutz eingesetzt werden. Bei diesen Geräten handelt es sich grundsätzlich um solche, die dem Strom von einer bestimmten Grösse an (zum Beispiel bei 5-fachem Netzstrom) allmählich bis schlagartig einen vielfach höheren Widerstand entgegensetzen und ihn auf diese Weise auf einen maximal möglichen Wert begrenzen. Dazu sind Geräte vorgeschlagen worden, die auf dem Prinzip der Supraleitung beruhen, wobei verschiedene Ausführungsformen bekannt sind:

- Resistiver (ohmscher) Begrenzer:
  Im Kurzschlussfall wird ein supraleitendes Element normalleitend und kommutiert den Strom auf einen begrenzenden Widerstand (vergl. K.E. Gray and D.E. Fowler, "A superconducting fault-current limiter", J. Appl. Phys. 49, Seiten 2546 - 2550, April 1978).
- Induktiver Begrenzer:
  Transformator mit Gleichstrom-Vormagnetisierung. Ein Transformator besitzt eine supraleitende Sekundärwicklung, die einen Gleichstrom führt, welcher den Eisenkern bis zur Sättigung magnetisiert. Dadurch wird die Impedanz des Apparates niedrig gehalten. Im Kurzschlussfall wird der Kern aus der Sättigung gebracht und die Impedanz steigt stark an (vergl. B.P. Raju and T.C. Bartram, "Fault-current limiter with superconducting DC bias", IEE Proc. 129, Pt. C. No. 4, Seiten 166 - 171, July 1982).
- Induktiver Begrenzer:
  Transformator mit kurzgeschlossener supraleitender Sekundärwicklung. Die kurzgeschlossene Sekundärwicklung setzt die Induktivität des Transformators im Normalbetrieb beträchtlich herab. Im Kurzschlussfall wird der Supraleiter in den Normalleitungszustand versetzt und die Induktivität nimmt stark zu: Resistiver Begrenzer mit Transformator mit Impedanzanpassung (vergl. US-A-4,700,257).

Die bekannten Wechselstrombegrenzer sind voluminös und aufwendig und erfordern, da auf klassischen Supraleitern basierend, einen beträchtlichen Kühlaufwand.

DARSTELLUNG DER ERFINDUNG

Die Erfindung, wie sie im Patentanspruch 1 definiert ist, löst die Aufgabe, eine Vorrichtung zur induktiven Strombegrenzung eines Wechselstromes unter Ausnutzung der Supraleitfähigkeit eines Supraleiters der eingangs genannten Art derart weiterzuentwickeln, dass Wechselströme ohne zusätzliche bzw. fremde Gleich- oder Wechselstromquellen mit einfachem Aufbau und geringstmöglichem zu kühlendem Volumen begrenzt werden können.

Ein Vorteil der Erfindung besteht darin, dass auch Wechselströme über 1 kA mit einem relativ geringen Kühlaufwand begrenzt werden können.

Dabei wird eine konventionelle Drosselspule bzw. Induktionsspule mit Eisenkern als limitierendes Element in Reihenschaltung, d. h. im Strompfad des zu begrenzenden Stromes, eingesetzt. Im Normalbetrieb, d. h. bei Strömen unterhalb des Schaltstromes (max. Strom) ist der Mantel im supraleitenden Zustand und schirmt das Magnetfeld der Wicklung vollständig vom Eisenkern ab (Meissnereffekt). Die Induktivität ist daher niedrig. Die Manteldicke wird so dimensioniert, dass beim gewünschten Schaltstrom das Magnetfeld der Wicklung die Supraleitung im Mantel ausschaltet. Die Vorrichtung verhält sich dann ähnlich wie eine konventionelle Drosselspule und begrenzt den Kurzschlussstrom. Die wesentlichen Vorteile und Neuerungen dieses Prinzips lauten:

- Durch die Ummantelung des Kerns über die volle Wicklungslänge der Induktionsspule wird eine vollständige Abschirmung des Kerns vom Magnetfeld im Normalbetrieb erreicht. Dies führt zu einer wesentlichen Reduktion der Verluste im Normalbetrieb, insbesondere werden Eisen- und Streuverluste stark herabgesetzt bzw. ganz vermieden.
- Durch die Anordnung des supraleitenden Mantels im Feldbereich der stromführenden Wicklung wird das Löschen im Kurzschlussfall wesentlich unterstützt. Es ist bekannt, dass mittels induzierter Ströme oder Strompulse oft nur ein unbefriedigender Löschverlauf realisiert werden kann. Das stets automatisch vorhandene Magnetfeld der Wicklung garantiert einen gleichmässigen Uebergang des Supraleiters in den Normalzustand.
- Die Anordnung des supraleitenden Mantels im feldbereich der stromführenden Wicklung führt zu einem deutlich höheren elektrischen Widerstand der Supraleiterschicht im Normalleitungszustand. Das ist eine Konsequenz der starken Magnetfeldabhängigkeit der kritischen Ströme sowie der Strom/Spannungskennlinien, die man in den keramischen Oxidsupraleitern findet. Der hohe elektrische Widerstand des Mantels im Normalleitungszustand erhöht die Drosselwirkung der Spule, die sonst durch induzierte Wirbelströme im Mantel vermindert würde.

## WEG ZUR AUSFÜHRUNG DER ERFINDUNG

Die Erfindung wird anhand der nachfolgenden, durch Figuren näher erläuterten Ausführungsbeispiele beschrieben.

Dabei zeigt:

Fig. 1 einen schematischen Längsschnitt durch den Grundaufbau einer Vorrichtung mit rotationssymmetrischen Bauteilen,

Fig. 2 einen schematischen Längsschnitt durch den Aufbau einer Vorrichtung mit geschlossenem magnetischen Kreis.

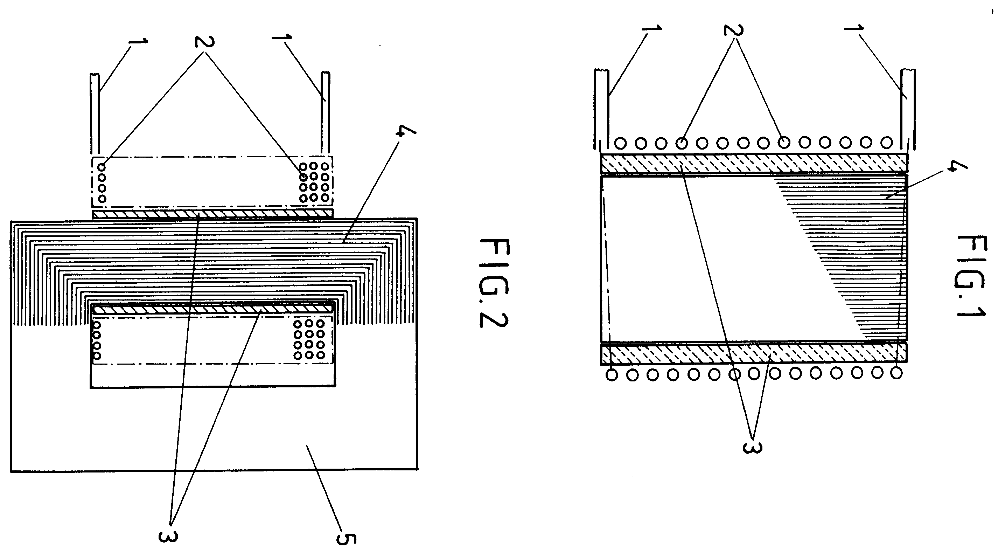

In Fig. 1 ist ein schematischer Längsschnitt durch den Grundaufbau einer Vorrichtung mit rotationssymmetrischen Bauteilen dargestellt. 1 ist der Stromanschluss für Wechselstrom für eine Induktionsspule 2 in Form einer Kupferwicklung. 3 ist ein rotationssymmetrischer Körper aus supraleitender Substanz in Form eines keramischen Hochtemperatur-Supraleiters (zum Beispiel SE $Ba_2Cu_3O_{6,5+y}$ mit SE = seltenes Erdmetall und $0 < y < 1$). Im Innern des Körpers 3 befindet sich ein Kern 4 aus weichmagnetischem Werkstoff, zum Beispiel Eisen. Der Kern 4 wird zur Herabsetzung der Wirbelstromverluste, was gleichbedeutend mit einem Impedanzverlust wäre, in der Regel lamelliert (Transformatorbleche) oder in Form von Drähten oder in Isoliermasse eingebetteten Pulvern ausgeführt.

Fig. 2 bezieht sich auf einen schematischen Längsschnitt durch den Aufbau einer Vorrichtung mit geschlossenem magnetischen Kreis. 1 ist der Stromanschluss zur Induktionsspule 2, die im vorliegenden Fall aus einer mehrlagigen zylindrischen Kupferwicklung besteht. 3 ist der als dünnwandiger Zylinder ausgeführte Körper aus supraleitender Substanz (keramischer Hochtemperatur-Supraleiter). Der Kern 4 aus weichmagnetischem Werkstoff (lamelliertes Eisen) hat seine Fortsetzung bei einem Joch 5 zur Schliessung des magnetischen Kreises. Dadurch werden optimale Durchflutungsverhältnisse erzielt und die maximal mögliche Induktivität erreicht.

AUSFÜHRUNGSBEISPIEL 1:

Aehnlich Fig. 1

Ein induktiver Strombegrenzer wurde für folgende Daten ausgelegt:

| Nennstrom | = 1 kA, |
|---|---|
| Maximaler Strom | = 5 kA, |
| Nennspannung | = 5 kV. |

Die radiale Dicke (Wandstärke) des hohlzylindrischen Körpers 3 aus supraleitender Substanz (im vorliegenden Fall $Y\,Ba_2Cu_3O_7$) ergibt sich wie folgt:

$$I_S = j_{crit}\,(r_2 - r_1) = I \cdot \frac{n}{l}$$

$j_{crit}$ =    kritische Stromdichte,
$2r_1$ =    Innendurchmesser des Körpers 3,
$2r_2$ =    Aussendurchmesser des Körpers 3,
$I$ =    Betriebsstrom der Induktionsspule 2,
$n$ =    Windungszahl der Induktionsspule 2,
$l$ =    Länge der Induktionsspule 2.
Für $n = 20$; $l = 1$ m, $j_{crit} = 200$ A/cm$^2$ = $2 \cdot 10^6$ A/m$^2$, $I = 1000$ A wird die Wandstärke

$r_2 - r_1 = 1$ cm.

Für den Durchmesser $2r_1$ des Kerns 4 aus weichmagnetischem Werkstoff (im vorliegenden Fall Eisen) ergeben sich folgende Beziehungen:

$$Z = \mu \cdot \mu_o \cdot \frac{n^2}{l} \cdot F_{Kern} \cdot \omega,$$

$Z$ =    Impedanz,
$\mu$ =    relative Permeabilität,
$\mu_o$ =    absolute Permeabilität,
$F_{Kern}$ =    Querschnitt des Kerns 4 = $r_1^2 \cdot \pi$,
$\omega$ =    Kreisfrequenz.
Bei $I_{max} = 5000$ A soll $Z = 1\Omega$ sein.
Die magnetische Feldstärke erreicht den Wert von 1,3 kOe; d.h. $\mu$ beträgt ca. 20. Daraus folgt:

$$r_1 = \sqrt{\frac{Z}{\mu \cdot \mu_o} \cdot \frac{l}{n^2} \cdot \frac{1}{\omega} \cdot \frac{1}{\pi}} = 31 \text{ cm},$$

$r_2 = 310 + 10 = 320$ mm.
Der Verlust im Körper 3 beträgt:

$$P = \frac{B_m^2}{2\mu_o} \cdot \frac{l}{3} \cdot \frac{50}{s};$$

$B_m$ =    maximale magnetische Induktion,

$\beta$ =

$$\frac{B_m}{B_p}$$

$B_p$ =    Induktion des äusseren Magnetfeldes, im Fall dass dieses gerade in den Kern 4 eindringt = $2\mu_0 j_{crit}\, (r_2 - r_1)$,

$B_m$ ist    ca. 250 G, $B_p$ = 500 G, $\beta$ = 0,5 und

P =    $2 \cdot 10^3$ W/m$^3$.

Bei einem Volumen des Körpers 3 von ca. 0,01 m$^3$ ergibt sich ein totaler Verlust bei Betriebsstrom von nur 20 W.

Die luftgekühlte Induktionsspule 2 bestand aus einer einlagigen Kupferwicklung mit 20 Windungen. Der Kupferquerschnitt betrug 20 x 20 = 400 mm$^2$, die Stromdichte 2,5 A/mm$^2$. Der Abstand von Mitte Windung zu Mitte Windung war 40 mm. Der Kern 4 aus weichmagnetischem Werkstoff war geblecht (Transformatorenblech 0,3 mm Dicke) und über ein Joch (nicht eingezeichnet in Fig. 1 !) zum vollständigen magnetischen Kreis geschlossen.

AUSFÜHRUNGSBEISPIEL 2:

Siehe Fig. 2 !

Die Daten des induktiven Strombegrenzers waren folgende:

| Nennstrom: | 1 A |
| Maximaler Strom: | 3 A |

Es wurde ein lamellierter Kern 4 aus 0,3 mm dickem Transformatorblech gefertigt. Der Kern 4 hatte eine Länge von 150 mm und einen Durchmesser von 30 mm. Der magnetische Kreis war durch ein ebenfalls geblechtes Joch 5 geschlossen.

Die mit den Stromanschlüssen 1 versehene Induktionsspule 2 bestand aus einer 4-lagigen Spule mit total 250 Windungen isolierten Kupferdrahts von 2 mm Durchmesser (Querschnitt 3,14 mm$^2$). Der reine ohmsche Widerstand der Induktionsspule betrug ca. 0,21Ω. die Stromdichte bei Nennstrom war ca. 0,32 A/mm$^2$, diejenige bei maximalem Strom ca. 0,95 A/mm$^2$. Sie wurde absichtlich niedrig gehalten, um sowohl im Normalbetrieb wie bei Kurzschluss die Verluste und somit die Kühlleistung niedrig zu halten. Die ohmschen Verluste der Induktionsspule 2 betrugen bei Nennstrom ca. 0,21 W, bei maximalem Strom ca. 1,9 W.

Der Körper 3 aus supraleitender Substanz wurde als hohlzylindrischer, keramischer Sinterkörper hergestellt. Seine Abmessungen betrugen:

| Aussendurchmesser | = 35 mm, |
| Innendurchmesser | = 31 mm, |
| Wandstärke | = 2 mm, |
| Länge | = 150 mm. |

Die Zusammensetzung des Körpers 3 entsprach der Formel

Y Ba$_2$ Cu$_3$ O$_{6,95}$.

Er wurde durch Mischen von Oxid- und Karbonatpulvern, Kalzinieren, Pressen und reaktives Sintern bei 930 °C in O$_2$-Atmosphäre hergestellt.

Die gesamte Vorrichtung wurde in ein wärmeisoliertes Gefäss gestellt und bei einer Temperatur von 77 K mit flüssigem Stickstoff gekühlt.

5

Die Versuche zeigen, dass die Drosselspule ohne Körper 3 aus supraleitender Substanz bei Wechselstrombetrieb unter einer Frequenz von 50 Hz eine Impedanz von $2,5\Omega$ aufwies. Bei Betrieb mit Körper 3 wurde die Impedanz durch die supraleitende Abschirmung auf weniger als $0,1\Omega$ (rein induktiv) herabgedrückt. Beim maximalen Strom von 3 A brach die Supraleitfähigkeit zusammen und die Impedanz stieg auf $2,5\Omega$ an. Die Differenz der Stromstärke im Uebergangsbereich niedrige Impedanz/hohe Impedanz betrug weniger als 1 A.

AUSFÜHRUNGSBEISPIEL 3:

Siehe Fig. 2 !

Der Aufbau der Vorrichtung entsprach im wesentlichen demjenigen von Beispiel 2.

Für den Körper 3 aus supraleitender Substanz wurde eine Mischung mit der nachfolgenden Zusammensetzung verwendet:

$Bi_2 \ Sr_2 \ Ca \ Cu_2 \ O_8$

Der Körper 3 wurde durch Mischen der Oxide im richtigen Verhältnis, Aufstampfen in einer Form, Pressen und reaktives Sintern hergestellt. Die Versuche zeigten ein ähnliches Verhalten wie beim Beispiel 2. Dank höherer Sprungtemperatur und somit dem grösseren zur Verfügung stehenden Temperaturgefälle bis zur Temperatur des flüssigen Stickstoffes war der Spielraum zur Einstellung der Vorrichtung breiter.

AUSFÜHRUNGSBEISPIEL 4:

Siehe Fig. 2 !

Der Aufbau der Vorrichtung entsprach ungefähr demjenigen von Beispiel 2.

Der Körper 3 bestand aus der nachfolgenden supraleitenden Substanz mit der Formel:

$Tl_2 \ Ba_2 \ Ca_2 \ Cu_3 \ O_{10}$

Zunächst wurden die Ausgangsstoffe in Form von Oxiden gemischt, vorgesintert, zerkleinert, gemahlen, das Pulver in einer Form bei erhöhter Temperatur vorgepresst und der Körper 3 durch reaktives Sintern in die endgültige Form gebracht. Betreffend die Versuchsresultate gilt das unter Beispiel 4 Gesagte.

Die Erfindung ist nicht auf die Ausführungsbeispiele beschränkt.

Grundsätzlich besteht die Vorrichtung zur induktiven Strombegrenzung eines Wechselstromes unter Ausnutzung der Supraleitfähigkeit eines keramischen Hochtemperatur-Supraleiters aus einer mindestens eine Windung aufweisenden, vom Strom durchflossenen Induktionsspule sowie einem konzentrisch zu der letzten angeordneten Körper aus supraleitender Substanz, wobei der Körper aus supraleitender Substanz eine zentralsymmetrische, im Innern hohle Form besitzt, und wobei sich im Innern dieses Körpers ein konzentrisch angeordneter zentralsymmetrischer Kern aus einem weichmagnetischen Werkstoff hoher Permeabilität befindet.

Der Körper aus supraleitender Substanz gehört einem der nachfolgenden Typen an:
- $SE \ Ba_2 \ Cu_3 \ O_{6,5+y}$, wobei SE ein seltenes Erdmetall und $0 < y < 1$ bedeutet;
- $(La, \ Ba, \ Sr)_2 \ Cu \ O_4$;
- $Bi_2 \ Sr_2 \ Ca \ Cu_2 \ O_8$;
- $Tl_2 \ Ba_2 \ Ca_2 \ Cu_3 \ O_{10}$.

Der Körper aus supraleitender Substanz hat die Form eines Hohlzylinders und der Kern aus weichmagnetischem Werkstoff die eines Vollzylinders, welcher aus weichem Eisen besteht.

In einer anderen Ausführung hat der Körper aus supraleitender Substanz die Form eines Hohlzylinders und der Kern aus weichmagnetischen Werkstoff die eines Vollzylinders, der durch ein Joch zu einem vollständigen in sich geschlossenen magnetischen Kreis ergänzt ist.

**Patentansprüche**

1. Vorrichtung zur induktiven Strombegrenzung eines Wechselstromes unter Ausnutzung der Supraleitfähigkeit eines Supraleiters

a) mit einem im Innern hohlen, zentralsymmetrischen Körper (3) aus einer supraleitenden Substanz,

b) mit einer bezüglich dieses supraleitenden Körpers (3) konzentrisch angeordneten Induktionsspule (2), die mindestens eine Windung aufweist,

c) mit mindestens einem ferromagnetischen Körper (4) im benachbarten Magnetfeldbereich der Induktionsspule (2),

dadurch gekennzeichnet,

e) dass der supraleitende Körper (3) aus einem keramischen Hochtemperatursupraleiter besteht und

f) dass die Vorrichtung nur zwei elektrische Stromanschlüsse (1) aufweist, die an die Induktionsspule (2) angeschlossen sind, derart, dass die Strombegrenzung in Abhängigkeit vom Erreichen oder Überschreiten eines Stromgrenzwertes des Stromes durch die Induktionsspule (2) bzw. vom Erreichen oder Überschreiten eines vorgebbaren Schaltstromes erfolgt.

2. Vorrichtung nach Anspruch 1, dadurch gekennzeichnet, dass der Körper (3) aus supraleitender Substanz einem der nachfolgenden Typen angehört:

- $SE\ Ba_2\ Cu_3\ O_{6,5+y}$, wobei SE ein seltenes Erdmetall und $O < y < 1$ bedeutet;
- $(La, Ba, Sr)_2\ Cu\ O_4$;
- $Bi_2\ Sr_2\ Ca\ Cu_2\ O_8$;
- $Tl_2\ Ba_2\ Ca_2\ Cu_3\ O_{10}$.

3. Vorrichtung nach Anspruch 1 oder 2, dadurch gekennzeichnet, dass die Induktionsspule (2) luftgekühlt ist.

4. Vorrichtung nach einem der vorhergehenden Ansprüche, dadurch gekennzeichnet,

a) dass der supraleitende Körper (3) kreiszylindrisch ist und

b) dass das Verhältnis seiner Wandstärke $(r_2 - r_1)$ zu dem vorgebbaren Schaltstrom $(I) = (r_2 - r_1)/I = n/(I \cdot j_{crit})$ ist, $j_{crit}$ = kritische Stromdichte des supraleitenden Körpers (3), n = Windungszahl der Induktionsspule (2) und I = deren Länge.

5. Vorrichtung nach einem der vorhergehenden Ansprüche, dadurch gekennzeichnet,

a) dass der mindestens eine ferromagnetische Körper (4) konzentrisch innerhalb des supraleitenden Körpers (3) angeordnet ist und

b) aus einem weichmagnetischen Werkstoff besteht.

**Claims**

1. Device for inductive current limiting of an alternating current employing the superconductivity of a superconductor

a) having a centrosymmetrical body (3) which is hollow in the interior and is made of a superconducting substance,

b) having an induction coil (2), which has at least one winding, arranged concentrically with respect to said superconducting body (3),

c) having at least one ferromagnetic body (4) in the neighbouring magnetic field region of the induction coil (2),

characterised

e) in that the superconducting body (3) consists of a ceramic high-temperature superconductor, and

f) in that the device has only two electrical current connections (1), which are connected to the induction coil (2) in such a way that the current limiting is performed depending on whether a current limit value of the current is reached or exceeded by the induction coil (2), or on whether a predeterminable switching current is reached or exceeded.

2. Device according to Claim 1, characterised in that the body (3) made of a superconducting substance belongs to one of the following types:

- $SE\ Ba_2\ Cu_3\ O_{6.5+y}$, where SE is a rare earth metal and $0 < y < 1$;
- $(La, Ba, Sr)_2\ Cu\ O_4$;
- $Bi_2\ Sr_2\ Ca\ Cu_2\ O_8$;
- $Tl_2\ Ba_2\ Ca_2\ Cu_3\ O_{10}$.

3. Device according to Claim 1 or 2, characterised in that the induction coil (2) is air-cooled.

7

**4.** Device according to one of the preceding claims, characterised

a) in that the superconducting body (3) is circular-cylindrical, and

b) in that the relationship of its wall thickness ($r_2$ - $r_1$) to the predeterminable switching current is (l) = ($r_2$ - $r_1$)/l = n/(l • $j_{crit}$),

$j_{crit}$ = the critical current density of the super-conducting body (3), n = the number of turns per unit length of the induction coil (2) and l = its length.

**5.** Device according to one of the preceding claims, characterised

a) in that the at least one ferromagnetic body (4) is arranged concentrically within the superconducting body (3), and

b) is made of a soft magnetic material.

**Revendications**

**1.** Dispositif pour la limitation par induction de l'intensité d'un courant alternatif à l'aide de la supraconductibilité d'un supraconducteur, comportant :

a) un corps (3) en une matière supraconductrice, symétrique autour d'un centre et intérieurement creux;

b) une bobine d'induction (2) qui comporte au moins une spire et qui est disposée concentriquement par rapport à ce corps supraconducteur (3);

c) au moins un corps ferromagnétique (4) dans le domaine de champ magnétique voisin de la bobine d'induction (2);

caractérise en ce que :

e) le corps supraconducteur (3) est fait d'un supraconducteur à haute température en céramique, et

f) le dispositif ne comporte que deux connexions électriques (1) qui sont connectées à la bobine d'induction (2) d'une manière telle que la limitation de courant s'effectue en fonction de l'atteinte ou du dépassement par excès d'une valeur limite de l'intensité du courant traversant la bobine d'induction (2) ou de l'atteinte ou du dépassement par excès d'un courant de commutation pouvant être prédéterminé.

**2.** Dispositif suivant la revendication 1, caractérisé en ce que le corps (3) en matière supraconductrice appartient à l'un des types suivants :

- $TRBa_2Cu_3O_{6,5+y}$, où TR est un métal des terres rares et $0 < y < 1$;
- $(La,Ba,Sr)_2CuO_4$ ;
- $Bi_2Sr_2CaCu_2O_8$ ;
- $Tl_2Ba_2Ca_2Cu_3O_{10}$.

**3.** Dispositif suivant la revendication 1 ou 2, caractérisé en ce que la bobine d'induction (2) est refroidie à l'air.

**4.** Dispositif suivant l'une quelconque des revendications précédentes, caractérisé en ce que :

a) le corps supraconducteur (3) est cylindrique circulaire, et

b) le rapport de son épaisseur de paroi ($r_2$ - $r_1$) au courant de commutation pouvant être prédéterminé (l) = ($r_2$ - $r_1$)/l = n/(l.$j_{crit}$), où $j_{crit}$ = densité de courant critique du corps supraconducteur (3), n = nombre de spires de la bobine d'induction (2), et l = longueur de la bobine d'induction.

**5.** Dispositif suivant l'une quelconque des revendications précédentes, caractérisé en ce que :

a) ledit au moins un corps ferromagnétique (4) est disposé concentriquement à l'intérieur du corps supraconducteur (3), et

b) est constitué d'une matière magnétique douce.

# FIG.1

# FIG.2